(19)

**Europäisches Patentamt**

**European Patent Office**

**Office européen des brevets**

(11) **EP 3 151 148 B1**

(12) **EUROPEAN PATENT SPECIFICATION**

(45) Date of publication and mention
of the grant of the patent:
**20.02.2019 Bulletin 2019/08**

(51) Int Cl.:
***G06F 21/56*** *(2013.01)*

(21) Application number: **16158363.8**

(22) Date of filing: **03.03.2016**

(54) **SYSTEM AND METHOD FOR GENERATING SETS OF ANTIVIRUS RECORDS FOR DETECTION OF MALWARE ON USER DEVICES**

SYSTEM UND VERFAHREN ZUR ERZEUGUNG VON SETS VON ANTIVIRUSAUFZEICHNUNGEN ZUR DETEKTION VON MALWARE AUF BENUTZERVORRICHTUNGEN

SYSTÈME ET PROCÉDÉ POUR PRODUIRE DES ENSEMBLES D'ENREGISTREMENTS D'ANTIVIRUS POUR LA DÉTECTION DE LOGICIELS MALVEILLANTS SUR DES DISPOSITIFS D'UTILISATEUR

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (72) Inventor: **PROKUDIN, Sergey V.**<br>**125212 Moscow (RU)** |
| (30) Priority: **30.09.2015 RU 2015141552**<br>**16.02.2016 US 201615044435** | (74) Representative: **Sloboshanin, Sergej et al**<br>**V. Füner, Ebbinghaus, Finck, Hano**<br>**Mariahilfplatz 3**<br>**81541 München (DE)** |
| (43) Date of publication of application:<br>**05.04.2017 Bulletin 2017/14** | (56) References cited:<br>**EP-A1- 2 854 065      WO-A1-2015/084313**<br>**US-A1- 2014 143 869** |
| (73) Proprietor: **AO Kaspersky Lab**<br>**Moscow 125212 (RU)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of Technology

The present invention relates generally to the field of computer security and, more specifically to systems and methods of generating a set of antivirus records to be used for detection of malicious files on a user's computing devices.

## Background

The number of different software applications for user's computing devices, such as personal computers, laptops, tablet, smart phones, etc, increases with tremendous pace. Among the multitude of applications there is a group of malicious programs which are able to cause harm to the user device or the data of the user, such as: Internet worms, key loggers and computer viruses. There have been developed many different technologies for providing computer security, such as antivirus software, which is designed to detect malicious programs on the user device and to block their operating ability (e.g., placing them in quarantine or removing them from the user device).

The antivirus software may use a number of different methods of detecting malicious software, malicious processes, other malicious objects of the operating system (OS) and links to them, such as the URI (Universal Resource Identifier, such as file://***.exe). The most popular malware detection methods are signature analysis (a technology for finding correspondences between a particular segment of code of the program being analyzed and a known code, or signature, in a database of signatures of malicious programs), heuristic analysis (a technology involving emulating the working of a program being analyzed, creating an API (Application Programming Interface) function call log, and finding correspondences between the data of the created API function call log and the data in a database of emulations of malicious programs), and proactive analysis (a technology involving intercepting API function calls launched in the system of the program being analyzed, creating an API function call log, and finding correspondences between the data of the created log and the data in a database of calls for API functions of malicious programs).

In operation, each of the aforementioned methods requires data to be used for the detection of malicious objects, for example, in the case of signature analysis, such data might be signatures, for heuristic analysis, such the data might be heuristic rules. Despite the fact that, for example, when a single signature is used, the antivirus software may detect a whole array of malicious objects similar in their structure or in the harm caused. Therefore, the ever increasing number of malicious objects which can cause harm to the user's data or to his computer requires a corresponding increase in the volume of data used for detecting malicious objects. In the majority of cases, said data is stored on the user's computer as part of antivirus libraries - a component of the antivirus software. Thus, increasing the volume of data used for the detection may result in the decrease of available space on the hard drive of the user device.

Document EP 2 854 065 A1 refers to a system and a method for evaluating malware detection rules for effectiveness and accuracy. The detection rule defines criteria for distinguishing files having a characteristic of interest from other files lacking that characteristic, for instance, malicious files vs. benign files. The detection rule is applied to a set of unknown files. This produces a result set that contains files detected from among the set of unknown files as having the at least one characteristic of interest. Each file from the result set is compared to at least one file from a set of known files having the characteristic to produce a first measure of similarity, and to at least one file from a set of known files lacking the characteristic to produce a second measure of similarity. In response to the first measure of similarity exceeding a first similarity threshold, the detection rule is deemed effective. In response to the second measure of similarity exceeding a second similarity threshold, the detection rule is deemed inaccurate.

Document WO 2015/084313 A1 is directed to a protection system including security rule evaluation. A device may comprise a protection module to identify threats to at least one of the device or to a network including the device. The protection module may include, for example, a rule evaluator (RE) module to evaluate proposed security rules for identifying the threats based on at least one ground truth scenario and to determine whether to promote the proposed security rules to new security rules. The proposed security rules may be generated by the protection module or received from other devices in the network or other networks. New security rules may be shared with the other devices and/or networks. The RE module may further trigger an independent evaluation of the proposed security rules, which may also be considered when determining whether to add the proposed security rules to the set of active rules in the device.

Although there are known approaches aimed at optimizing (reducing) the space on a hard drive occupied by data used for the detection of malicious objects, they are not able to solve the problem of selection of the data to be used for the detection of malicious objects, namely, the generating of such a set of data to be used for the detection of malicious objects which does not require a large memory volume for storage, yet which affords a reliable protection of the user device, or they do not solve this problem effectively enough. Therefore, there is a need for a more effective solution of the problem of selection of the data to be used for detection of malicious objects.

## Summary

Disclosed are systems and method for generating a set of antivirus records to be used for detection of malicious files on a user's computing devices. The invention is defined by the scope of the appended claims.

## Brief Description of the Drawings

The accompanying drawings, which are incorporated into and constitute a part of this specification, illustrate one or more example aspects of the present invention and, together with the detailed description, serve to explain their principles and implementations.

**Fig. 1** illustrates a diagram of an exemplary system for generating a set of antivirus records to be used for detection of malicious files on a user device.

**Fig. 2** shows a flow diagram of an exemplary method of generating a set of antivirus records to be used for detection of malicious files on a user device.

**Fig. 3** illustrates an example of a general-purpose computer system by means of which the disclosed aspects of systems and method can be implemented.

## Detailed Description of Examples of the Invention

Example aspects of the present invention are described herein in the context of a system, method, and computer program product for generating a set of antivirus records to be used for detection of malicious files on a user's computing devices. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

Initially, a number of definitions of terms which will be used in describing various examples of the invention will be provided herein below.

A malicious application may include an application able to cause harm to a computer or to the data of the computer user, for example, an Internet worm, a key logger, a computer virus. The harm caused may be unlawful access to computer resources, including the data being stored on the computer, for the purpose of theft, and also unlawful use of resources, including for data storage, performance of calculations, and so on.

A trusted application may include an application which does not cause harm to the computer or its user. A trusted application can be an application developed by a trusted software manufacturer, downloaded from a trusted source (such as a site listed in a database of trusted sites) or an application whose identifier (such as the MD5 of the application file) is stored in a database of trusted applications. The manufacturer's identifier, such as a digital certificate, may also be stored in the database of trusted applications.

An untrusted application may include an application which is not trusted, but also not recognized as being malicious, for example, by means of an antivirus application.

A malicious file may include a component of a malicious application, such as an executable file, a configuration file, and other files used by the application during its execution.

An untrusted file may include a file which is a component of an untrusted application.

A trusted file may include a file which is a component of a trusted application.

Signature analysis may include a technology of finding correspondences between a particular segment of program code and a known code - signature - from a database of signatures of malicious programs with the goal of detecting a malicious program. It should be noted that this technology can be used both to detect files of a malicious program and to detect malicious code in the RAM of a computing device.

Heuristic analysis may include a technology involving emulating the execution of a program (executing program code, adapted for execution with the use of certain hardware and software, by making use of other hardware and software different from the former), creating an API function call log, and finding correspondences between the data of the created API function call log and the data from a database of emulations of malicious programs in order to detect a malicious program.

Proactive analysis may include a technology involving intercepting API function calls launched in the operating system of the program, creating an API function call log, and finding correspondences between the data from the created log and the data from a database of API function calls of malicious programs in order to detect a malicious program.

An antivirus record may include information needed by the antivirus application to detect malicious files. It may be, for example, a signature, a heuristic rule (which can be used, for example, by heuristic and proactive analysis), a check sum or hash of a file (including a flexible or locality-sensitive hash - a file hash which is invariant to minor file changes).

The statistics on the use of an antivirus record may include information on the number of malicious files detected by the antivirus application using the antivirus record, and also an identifier of each file detected with the help of the antivirus record (for example, a check sum calculated according to one of the algorithms: MD5, SHA-1, SHA-2, or a character string - the file name). The collection of statistics may be done by the antivirus application using the antivirus record for detection of malicious files (during the detection of malicious files).

The effectiveness of an antivirus record may be a numerical value; the larger it is, the more malicious files have been detected by the antivirus application using that antivirus record among the files in a files database.

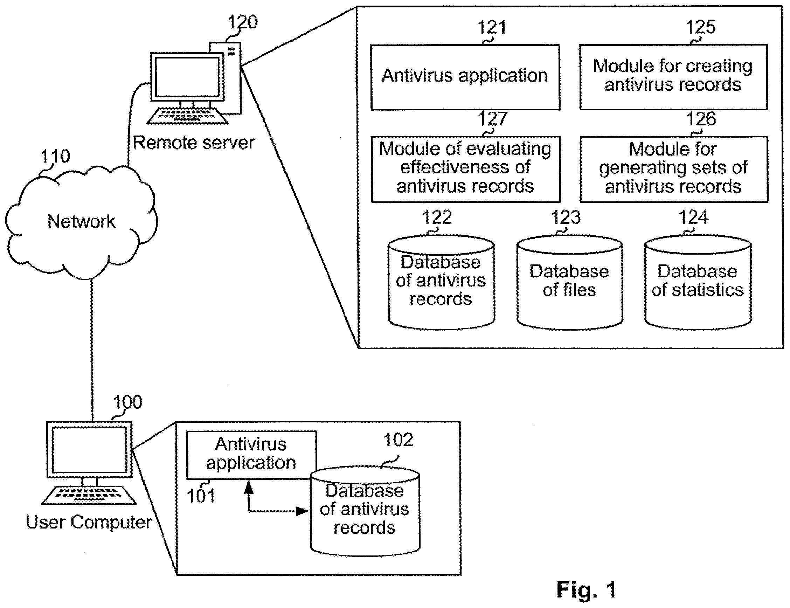

Fig. 1 shows a diagram of an exemplary system for generating a set of antivirus records to be used for detection of malicious files on a user's computer according to one aspect of the invention. On the user's computer **100** there is installed an antivirus application **101,** which is configured to detect malicious files on the computer **100.** The antivirus application **101** uses the antivirus records stored in a database of antivirus records **102,** which likewise may reside on the user's computer **100.** The user's computer **100** is connected via a network **110** (for example, the Internet or a local area network, LAN) to a remote server **120.** In one example, the remote server **120** may be a single computing device. In another example the remote server **120** may be a set of connected computing devices performing distributed computations (computations in which the overall volume of computations, such as the execution of code, is broken up into parts and distributed among several computing devices) for performing functions of systems and methods disclosed herein.

In one example, the remote server **120** may include an antivirus application **121,** a module of creating antivirus records **125,** a module of generating sets of antivirus records **126,** a module of evaluation of the effectiveness of antivirus records **127,** a database of antivirus records **122,** a database of files **123** and a database of statistics **124.**

It should be noted that the antivirus application **101** and the antivirus application **121** in one example of the invention may perform similar functions in the detection of malicious objects and collection statistics, which will be described below.

In one example, the database of files **123** is configured to store files, such as malicious files, trusted files and untrusted files, as well as information as to whether a file being stored is malicious, trusted, or untrusted. In one example, files are added to the database of files **123** by an expert in computer security together with information (indication) as to whether the file is malicious, trusted, or untrusted. In yet another example, in addition to the aforementioned files, file identifiers may be stored in the database of files **123** (for example, check sums of files calculated according to one of the algorithms: MD5, SHA-1, SHA-2, or a character string - the file name).

In one example, the antivirus application **121** is configured to detect malicious files. For detection of malicious files, the antivirus application **121** utilizes antivirus records (at least one) from a database of antivirus records **122,** the database of antivirus records **122** being configured to store antivirus records. The antivirus records may be used by the antivirus application **121** in the course of performing a signature, heuristic or proactive analysis.

In one example, the antivirus record may contain a flexible hash (locality-sensitive hash). The flexible hash is also known as a "flexible convolution" constitutes a hash sum (hash) which is calculated from a set of file attributes, which is resistant to slight changes in the file (for example, the hash sum calculated from the file will coincide with the hash sum calculated from a file in which one of the attributes, for example, has a different value). In the case that the antivirus record contains a flexible hash of a malicious file, the antivirus application **121** during the analysis of the file in order to detect a malicious file will calculate the flexible hash of the file being analyzed (from the set of file attributes) and compare this with the flexible hash from the antivirus record. If the calculated flexible hash and the flexible hash from the antivirus record match, the file being analyzed is recognized by the antivirus application **121** as being malicious. In one example, the antivirus record may contain, besides a flexible hash, information (such as a character identifier) as to the method of calculating the hash, which needs to be used by the antivirus application **121** during the analysis of the file. It should be noted that the above-described method of detection (using antivirus records containing a flexible hash) of malicious files can also be used by the antivirus application **101** which is residing on the user's computer **100.**

In one example, the module for creating antivirus records **125** is configured to create antivirus records and store them in a database of antivirus records **122.** For the creation of an antivirus record, the module **125** uses the file (which will need to be detected with the help of the antivirus record) and one of the following methods of creating antivirus records.

In one example, the module for creating antivirus records **125** creates an antivirus record for detection of a malicious file, said record containing a signature (a sequence of bytes of the file) of the indicated file so that the file is recognized as malicious by the antivirus application **121** if it contains the signature from the antivirus record.

In another example, the module for creating antivirus records **125** creates an antivirus record for detection of a malicious file, said record containing a heuristic rule such that said file is recognized as malicious by the antivirus application **121** in accordance with the logic of the heuristic rule, which is applied to the API function call log which is generated during the emulated execution of the program (if the file is executable) during the heuristic analysis of the file. In one example, the technology described in a commonly owned US Patent 9,147,073 may be used to create such an antivirus record.

In yet another example, the module for creating antivirus records **125** creates an antivirus record for detection of a malicious file, said record containing a heuristic rule such that said file is recognized as malicious by the antivirus application **121** in accordance with the logic of the heuristic rule, which is applied to the API function call log which is generated upon interception of API function calls which is launched in the operating system of the program (if the file is executable) during the proactive analysis of the file. An example of this technology is described in a commonly owned US Patent 8,566,943.

In yet another example, the module for creating antivirus records **125** creates an antivirus record for detection of a malicious file, said record containing a flexible hash of the file, such that said file is recognized as malicious by the antivirus application **121** if the calculated flexible hash of the file matches up with the flexible hash from the antivirus record.

In yet another example, the module for creating antivirus records **125** is configured to create several antivirus records for the same malicious file, by means of which records said file can be recognized as malicious by the antivirus application **121** (for example, with the use of several of the aforementioned methods of creating an antivirus record). In one example, the module of creating antivirus records **125** is able to create antivirus records containing different flexible hashes for detection of one and the same file (we shall assume that such antivirus

records are created using different methods for creation of antivirus records). Each of these antivirus records is created with the use of its own method of calculation of the hash (for example, one of the methods listed below). In one example, the module of creating antivirus records **125** may use algorithm for calculation of flexible hashes for creating antivirus records as described in a commonly owned US Patent 8,955,120. The sets of file attributes used in calculating the flexible hash may be different:

For example, in order to calculate the flexible hash, the following set of file attributes may be used: the file size, the file image size, the number of file sections, the RVA (Related Virtual Address) of the file sections, the RVA of the entry point, the type of subsystem, the file characteristics from the COFF (Common Object File Format) header, the mutual arrangement of the objects of the table of directories, the disposition of the objects of the table of directories by file sections, the type of compiler used to create the file, the frequency characteristics of the characters (including printed characters) - the frequencies of encountering the characters in the file, the set of lines of the file and their number. A set of file attributes for each file section includes the following attributes: the informational entropy of the beginning and end of a section, the average number of nonzero bytes of the beginning and end of a section, the virtual size of a section, the physical size of a section.

In another example, in order to calculate the flexible hash, the following set of file attributes may be used: the file size, the file image size, the number of file sections, the RVA of the file sections, the RVA of the entry point, the type of subsystem, the file characteristics from the COFF header, the type of compiler used to create the file;

In yet another example, in order to calculate the flexible hash, the following set of file attributes may be used: the file size, the file image size, the type of subsystem, the frequency characteristics of the characters (the frequencies of encountering the characters in the file, the set of lines of the file and their number).

In yet another example, in order to calculate the flexible hash, the following set of file attributes may be used: the file size, the file image size, the number of file sections, file sections, the RVA of the entry point, the type of subsystem, the file characteristics from the COFF header, the mutual arrangement of the objects of the table of directories, the disposition of the objects of the table of directories among the file sections, the type of compiler used to create the file, the frequency characteristics of the characters. The set of file attributes for each file section may include the following attributes: the informational entropy of the beginning and end of a section, the average number of nonzero bytes of the beginning and end of a section, the virtual size of a section, the physical size of a section.

In yet another example, in order to calculate the flexible hash, the following set of file attributes may be used: the file size, the file image size, the type of subsystem, the file characteristics from the COFF header, the type of compiler used to create the file, the frequency characteristics of the characters.

In another example, in order to calculate the flexible hash, various other combinations of the aforementioned attributes may be used.

In yet another example, the module for creating antivirus records **125** allows an expert in computer security to create an antivirus record (e.g., via a user's interface) for one of the aforementioned methods of detection (e.g., signature, heuristic analysis, and others).

In one example, the module for creating antivirus records **125** stores the created antivirus records in the database of antivirus records **122.**

In one example, the module for creating antivirus records **125** uses malicious files from the database of files **123** for one or more creating antivirus records using one or more of the aforementioned methods, respectively, with the help of which the antivirus application **121** can recognize as malicious the aforesaid files from the database of files **123.**

In one example, the antivirus application **121** is configured to collect statistics on the use of antivirus records to be used for detection of malicious files. The statistics on the use of antivirus records is collected using the database of files **123,** as well as the database of antivirus records **122,** specifically upon detection of malicious files with the use of the antivirus records from the database of antivirus records **122** among the files of the database of files **123.** The antivirus application **121** sends statistics collected on the use of the antivirus records for storage to the database of statistics **124.** It should be noted that the antivirus application **121,** using an antivirus record, can recognize as malicious not only known malicious files (such as malicious files from the database of files **123**), but also trusted files (whose detection is considered a "false alarm" or "false positive") or untrusted files from the database of files **123**.

In one example, the database of statistics **124** is configured to save the statistics on the use of antivirus records collected by the antivirus application **121.**

In one example, the module of evaluating the effectiveness of antivirus records **127** is configured to determine (calculate) the effectiveness of at least one antivirus record. The module **127** calculates the effectiveness of each antivirus record from the database of antivirus records **122** for which the antivirus application **121** has collected statistics on the use of antivirus record and saved this statistics on the use of antivirus record in the database of statistics **124.** In one example, the effectiveness of the antivirus record can be calculated with the use of the following formula:

$$K = U$$

where K is the effectiveness of the antivirus record and U is the number of files (one example, from the database of files **123**) which have been recognized as malicious by the antivirus application **121** using the aforementioned antivirus record.

In yet another example, the effectiveness of the antivirus record can be calculated with the use of the following formula:

$$K = f * U$$

where K is the effectiveness of the antivirus record, U is the number of files (in one example, from the database of files **123**) which have been recognized as malicious by the antivirus application **121** using the aforementioned antivirus record, and f is a coefficient which takes on the value 0 if there are trusted files among the files which have been recognized as malicious by the antivirus application **121** using the aforementioned antivirus record, and otherwise the value 1.

In yet another example, the effectiveness of the antivirus record can be calculated with the use of the following formula:

$$K = \sum_{i}^{n} a_i$$

where K is the effectiveness of the antivirus record, n is the total number of files which have been recognized as malicious using said antivirus record, and $a_i$ is a coefficient which can take on, for example, the following values (for the i-th file):

• the value "2" for malicious files;
• the value "-1000" for trusted files;
• the value "0.5" for untrusted files.

Information as to whether a file is malicious, trusted or untrusted, which is used in the above formula, can be obtained from the database of files **122** using the file identifier from the statistics on the use of antivirus record.

In yet another example, the database of files **122** in addition to each file can store its weighting factor p - popularity (number of users on whose computers such a file is found). In one example, this weighting factor for each file can be added to the database of files **122** by an expert in computer security. In this case, the effectiveness of the antivirus record can be calculated with the use of the following formula:

$$K = \sum_{i}^{n} a_i * p_i$$

where K is the effectiveness of the antivirus record, n is the total number of files which have been recognized as malicious with the use of said antivirus record, $p_i$ - is the popularity of the i-th file, and $a_i$ is a coefficient which can take on the following values (for the i-th file):

• the value "1" for malicious files;
• the value "-100" for trusted files;
• the value "0" for untrusted files.

Information as to whether a file is malicious, trusted or untrusted, which is used in the above formula, and also the coefficient $p_i$ for each file, can be obtained from the database of files **122** by the file identifier from the statistics on the use of antivirus record.

In one example, the module for generating a set of antivirus records **126** is configured to generate a set of antivirus records for transmission of said set of antivirus records to the user's computer **100,** specifically to the database of antivirus records **102.** To generate the set of antivirus records, the module **126** may utilize antivirus records from the database of antivirus records **122,** as well as the effectiveness of each aforementioned antivirus record, provided by the module **127** from the database of antivirus records **122.** The purpose of generating a set of antivirus records is to generate a set of antivirus records so that all malicious files from the database of files **123** can be detected with the help of the antivirus application **121** utilizing the aforementioned set of antivirus records. This set of antivirus records consists of a minimum quantity of antivirus records, which reduces the amount of memory on the hard drive of the user's computer **100** occupied by the antivirus records stored in the database of antivirus records **102** and used by the antivirus application **101.**

In one example, the module for generating a set of antivirus records **126** may generate a set of antivirus records as follows: for a malicious file from the database of files **123** an antivirus record is selected with the highest effectiveness from among those antivirus records in the database of antivirus records **122.** Using these records the antivirus application **121** recognized said file as being malicious (in accordance with the statistics on the use of antivirus records previously collected by the antivirus application **121**). The selected record is added to the set of antivirus records by the module for generating a set of antivirus records **126.** For the next file from the database of files **123** in similar fashion an antivirus record is selected with the highest effectiveness from among those antivirus records of the database of antivirus records **122.** Using these records the antivirus application **121** recognized the mentioned file as being malicious, while if the selected antivirus record is already present in the set of antivirus records being generated by the module **126,** the antivirus record will not be added once more (to exclude duplication of antivirus records in the set). But if the selected antivirus record is not present in the set of antivirus records, the mentioned antivirus record is added by the module **126** to the set of antivirus records. The module for generating a set of antivirus records **126** performs the aforementioned actions for each malicious file from the database of files **123.** The set of antivirus records generated in this way is sent by the module **126** to the user's computer **100,** specifically to the database of antivirus records **102,** for subsequent use of the antivirus records from the transmitted set of antivirus records by the antivirus program **101** for detection of malicious files on the user's computer **100.**

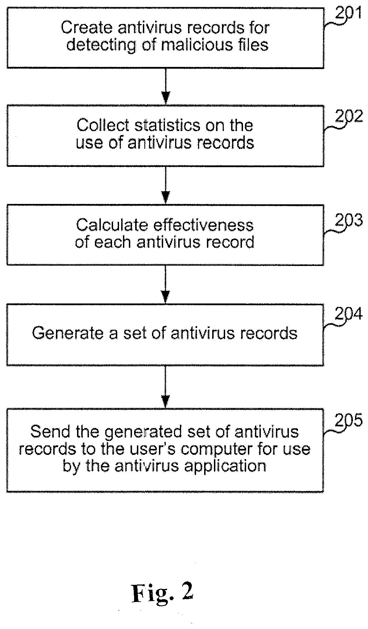

**Fig. 2** shows an exemplary method of generating a set of antivirus records to be used for detection of malicious files on a user's computer according to one aspect of the invention. In step **201,** the module of creating antivirus records **125** creates a set of antivirus records for each malicious file from the database of files **123,** each of the antivirus records from the set may be created using one of the above-described methods of creating antivirus records. The created antivirus records are saved by the module **125** in the database of antivirus records **122.** In step **202,** the antivirus application **121** collects statistics on the use of the antivirus records from the database of antivirus records **122.** Te antivirus application **121** uses the antivirus records from the database of antivirus records **122** to detect malicious files among the files (all files, not only the malicious ones) from the database of files **123** (the detection of a malicious file by the antivirus application **121** meaning the recognition of the file as being malicious in accordance with the antivirus records used by the antivirus application **121**). The collected statistics on the use of the antivirus records are saved by the antivirus application **121** in the database of statistics **124.** Next, in step **203,** the module for evaluating the effectiveness of antivirus records **127** calculates the effectiveness of each antivirus record from the database of antivirus records **122** on the basis of the statistics on the use of the antivirus records, which are contained in the database of statistics **124.** The calculated effectiveness of each antivirus record is sent by the module **127** to the module of generating a set of antivirus records **126.** In step **204,** the module **126** generates a set of antivirus records, such that for each malicious file from the database of files **123,** the antivirus record is selected with the highest effectiveness from among all the antivirus records. Using this record the antivirus application **121** recognized that file as being malicious. The selected antivirus records is added by the module for generating a set of antivirus records **126** to the aforementioned set of antivirus records (being generated). The information as to which files are recognized as malicious by the antivirus application **121** using the antivirus record, which information is needed by the module of generating a set of antivirus records **126** to generate the set of antivirus records, is stored in the database of statistics **124** - the database of statistics saves for each antivirus record the identifiers of each file recognized as malicious by the antivirus application **121** with the use of said antivirus record. Using the identifier of each malicious file from the database of files **123,** the module of generating a set of antivirus records **126** determines all the antivirus records from the database of antivirus records **122,** using which the antivirus application **121** recognized this file as being malicious. The generated set of antivirus records in step **205** is sent by the module of generating a set of antivirus records **126** to the database of antivirus records **102** residing on the user's computer **100,** for later use of the antivirus records from this set by the antivirus application **101** to detect malicious files on the user's computer **100.**

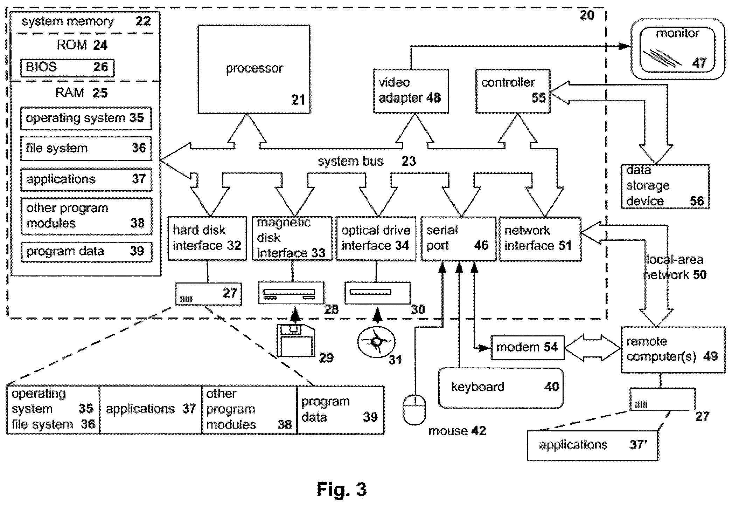

**Fig. 3** illustrates an example of a general-purpose computer system (which may be a personal computer or a server) on which the disclosed systems and method can be implemented. As shown, the computer system includes a central processing unit 21, a system memory 22 and a system bus 23 connecting the various system components, including the memory associated with the central processing unit 21. The system bus 23 is realized like any bus structure known from the prior art, containing in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are effectiveness-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is stored, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate in a network environment, using a network connection to one or more remote computers 49. The remote computer (or computers) 49 are also personal computers or servers having the majority or all of the aforementioned elements in describing the nature of a personal computer 20. Other devices can also be present in the computer network, such as routers, network stations, peer devices or other network nodes.

Network connections can form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 3 above). Accordingly, each module can be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

**Claims**

1. A method for generating a set of antivirus records, the method comprising:

   maintaining, by a server (120), a database (123) of files, wherein the database (123) of files is configured to store malicious files, trusted files and untrusted files;
   generating, by the server (120), several antivirus records containing different locality sensitive hashes for each malicious file in the database (123) of files, wherein each of the several antivirus records includes a locality sensitive hash calculated from a different set of file attributes of the malicious file;
   calculating, by the server (120), an effectiveness of each antivirus record by determining how many different malicious files were detected using each antivirus record and a number of false positive detections by said antivirus record;
   generating, by the server (120), a set of most effective antivirus records, comprising:

      selecting for each known malicious file the most effective antivirus record used in detection of said malicious file, wherein the most effective antivirus record is calculated as a function of both the number of different malicious files detected by the antivirus record and the number of false positive detections by the antivirus record;
      determining whether the selected antivirus record is already in the set; and
      responsive to determining that the selected antivirus record is not in the set, adding said record to the set; and

   transmitting, by the server (120), the set of most effective antivirus records to a client device (100).

2. The method of claim 1, wherein each antivirus record further includes one or more of: a signature of a malicious file; a heuristic rule used for detection of a malicious file during emulation of the malicious file; or a heuristic rule used for detection of a malicious file during proactive detection.

3. The method of claim 1 or 2, wherein calculating an effectiveness of each antivirus record includes collecting, by an antivirus application (121) running on the server (120), statistics on a number of malicious files detected by the antivirus application (121) using each antivirus record.

4. The method of claim 1 or 2, wherein the effectiveness of an antivirus record is calculated as a function of a number of different malicious files detected by said antivirus record, the number of false positive detections by the antivirus record and a category to which each of the detected malicious files belongs, the category including one of the trusted, untrusted and malicious.

5. The method of claim 4, wherein the effectiveness of an antivirus record is further calculated as a function of a popularity of each detected malicious file on client devices (100).

6. The method of claim 1 or 2, wherein the set of file attributes of the malicious file used to calculate at least one of the locality sensitive hashes includes:

   a) the file size, the file image size, the number of file sections, the Related Virtual Address (RVA) of the file sections, the RVA of the entry point, the type of subsystem, the file characteristics from the Common Object File Format (COFF) header, and the type of compiler used to create the file;
   b) the file size, the file image size, the type of subsystem, and the frequency characteristics of the characters in the file; or
   c) the file size, the file image size, the type of subsystem, the file characteristics from the COFF header, the type of compiler used to create the file, and the frequency characteristics of the characters in the file.

7. The method of claim 1 or 2, wherein each antivirus record further comprises information identifying the method of calculating the locality sensitive hash contained in the antivirus record.

8. A system for generating sets of antivirus records, the system comprising:

   a server (120) having a hardware processor (21) configured to:

      maintain a database (123) of files, wherein the database (123) of files is configured to store malicious files trusted files and untrusted files;
      generate several antivirus records containing different locality sensitive hashes for each malicious file in the database (123) of files, wherein each of the several antivirus records includes a locality sensitive hash calculated from a different set of file attributes of the malicious file;
      calculate effectiveness of each antivirus record by determining how many different malicious files were detected using each antivirus record and a number of false positive detections by said antivirus record; generate a set of most effective antivirus records, by:

> selecting for each known malicious file the most effective antivirus record used in detection of said malicious file, wherein the most effective antivirus record is calculated as a function of both the number of different malicious files detected by said antivirus record and the number of false positive detections by said antivirus record; determining whether the selected antivirus record is already in the set; and responsive to determining that the selected antivirus record is not in the set, adding said record to the set; and

> transmit the set of most effective antivirus records to a client device (100).

**9.** The system of claim 8, wherein each antivirus record further includes one or more of: a signature of a malicious file; a heuristic rule used for detection of a malicious file during emulation of the malicious file; or a heuristic rule used for detection of a malicious file during proactive detection.

**10.** The system of claim 8 or 9, wherein calculating an effectiveness of each antivirus record includes collecting, by an antivirus application running on the server (120), statistics on a number of malicious files detected by the antivirus application using each antivirus record.

**11.** The system of claim 8 or 9, wherein the effectiveness of an antivirus record is calculated as a function of a number of different malicious files detected by said antivirus record, the number of false positive detections by the antivirus record, and a category to which each of the detected malicious files belongs, the category including one of the trusted, untrusted and malicious.

**12.** The system of claim 11, wherein the effectiveness of an antivirus record is further calculated as a function of a popularity of each detected malicious file on client devices (100).

**13.** The system of claim 8 or 9, wherein the set of file attributes of the malicious file used to calculate at least one of the locality sensitive hashes includes:

> a) the file size, the file image size, the number of file sections, the Related Virtual Address (RVA) of the file sections, the RVA of the entry point, the type of subsystem, the file characteristics from the Common Object File Format (COFF) header, and the type of compiler used to create the file;
> b) the file size, the file image size, the type of subsystem, and the frequency characteristics of the characters in the file; or
> c) the file size, the file image size, the type of subsystem, the file characteristics from the COFF header, the type of compiler used to create the file, and the frequency characteristics of the characters in the file.

**14.** The system of claim 8 or 9 , wherein each antivirus record further comprises information identifying the method of calculating the locality sensitive hash contained in the antivirus record.

**15.** A computer program product stored on a non-transitory computer-readable storage medium, the computer program product comprising computer-executable instructions for performing the method steps of claims 1-7.

**Patentansprüche**

**1.** Verfahren zum Erzeugen eines Satzes von Antivirus-Aufzeichnungen, wobei das Verfahren umfasst:

> Aufrechterhalten, durch einen Server (120), einer Datenbank (123) von Dateien, wobei die Datenbank (123) von Dateien dazu konfiguriert ist, schädliche Dateien, vertrauenswürdige Dateien und nicht vertrauenswürdige Dateien zu speichern;
> Erzeugen, durch den Server (120), mehrerer Antivirus-Aufzeichnungen, die unterschiedliche lokalitätssensitive Hashes für jede schädliche Datei enthalten, in der Datenbank (123) von Dateien, wobei jede der mehreren Antivirus-Aufzeichnungen einen lokalitätssensitiven Hash umfasst, der aus einem unterschiedlichen Satz von Dateiattributen der schädlichen Datei berechnet wurde;
> Berechnen, durch den Server (120), einer Effektivität jeder Antivirus-Aufzeichnung durch Bestimmen, wie viele unterschiedliche schädliche Dateien unter Verwendung jeder Antivirus-Aufzeichnung detektiert wurden, und einer Anzahl von falschen positiven Detektionen durch die Antivirus-Aufzeichnung;
> Erzeugen, durch den Server (120), eines Satzes von effektivsten Antivirus-Aufzeichnungen, umfassend:

> > Auswählen, für jede bekannte schädliche Datei, der effektivsten Antivirus-Aufzeichnung, die bei einer Detektion der schädlichen Datei verwendet wurde, wobei die effektivste Antivirus-Aufzeichnung als eine Funktion sowohl der Anzahl unterschiedlicher schädlicher Dateien, die durch die Antivirus-Aufzeichnung detektiert wurden, als auch der Anzahl falscher positiver Detektionen durch die Antivirus-Aufzeichnung berechnet wird;

Bestimmen, ob die ausgewählte Antivirus-Aufzeichnung bereits im Satz enthalten ist; und

ansprechend auf ein Bestimmen, dass die ausgewählte Antivirus-Aufzeichnung nicht im Satz enthalten ist, Hinzufügen der Aufzeichnung zu dem Satz; und

Übertragen, durch den Server (120), des Satzes von effektivsten Antivirus-Aufzeichnungen an ein Kundengerät (100).

2. Verfahren nach Anspruch 1, wobei jede Antivirus-Aufzeichnung ferner eine oder mehrere umfasst von: einer Signatur einer schädlichen Datei; einer heuristischen Regel, die zur Detektion einer schädlichen Datei während einer Emulation der schädlichen Datei verwendet wurde; oder einer heuristischen Regel, die zur Detektion einer schädlichen Datei während einer proaktiven Detektion verwendet wurde.

3. Verfahren nach Anspruch 1 oder 2, wobei das Berechnen einer Effektivität jeder Antivirus-Aufzeichnung ein Sammeln, durch eine Antivirus-Anwendung (121), die auf dem Server (120) läuft, von Statistiken über eine Anzahl von schädlichen Dateien umfasst, die durch die Antivirus-Anwendung (121) unter Verwendung jeder Antivirus-Aufzeichnung detektiert wurden.

4. Verfahren nach Anspruch 1 oder 2, wobei die Effektivität einer Antivirus-Aufzeichnung als eine Funktion einer Anzahl von unterschiedlichen schädlichen Dateien, die durch die Antivirus-Aufzeichnung detektiert wurden, der Anzahl von falschen positiven Detektionen durch die Antivirus-Aufzeichnung und einer Kategorie berechnet wird, zu der jede der detektierten schädlichen Dateien gehört, wobei die Kategorie vertrauenswürdig, nicht vertrauenswürdigen oder schädlich umfasst.

5. Verfahren nach Anspruch 4, wobei die Effektivität einer Antivirus-Aufzeichnung ferner als eine Funktion einer Popularität jeder detektierten schädlichen Datei auf Kundengeräten (100) berechnet wird.

6. Verfahren nach Anspruch 1 oder 2, wobei der Satz von Dateiattributen der schädlichen Datei, der verwendet wird, um wenigstens einen der lokalitätssensitiven Hashes zu berechnen, umfasst:

a) die Dateigröße, die Dateibildgröße, die Anzahl von Dateisektionen, die zugehörige virtuelle Adresse (*Related Virtual Address; RVA*) der Dateisektionen, die RVA des Eintrittspunkts, den Typ Subsystem, die Dateicharakteristika aus dem Header des allgemeinen Objektdateiformats (*Common-Object-File-Format; COFF*), und den Typ Compiler, der verwendet wurde, um die Datei zu erzeugen;

b) die Dateigröße, die Dateibildgröße, den Typ Subsystem, und die Frequenzcharakteristika der Zeichen in der Datei; oder

c) die Dateigröße, die Dateibildgröße, den Typ Subsystem, die Dateicharakteristika aus dem COFF-Header, den Typ Compiler, der verwendet wurde, um die Datei zu erzeugen, und die Frequenzcharakteristika der Zeichen in der Datei.

7. Verfahren nach Anspruch 1 oder 2, wobei jede Antivirus-Aufzeichnung ferner Informationen umfasst, die das Verfahren zum Berechnen des lokalitätssensitiven Hashes identifizieren, der in der Antivirus-Aufzeichnung enthalten ist.

8. System zum Erzeugen von Sätzen von Antivirus-Aufzeichnungen, wobei das System umfasst:

einen Server (120), der einen Hardware-Prozessor (21) aufweist, der dazu konfiguriert ist:

eine Datenbank (123) von Dateien aufrechtzuerhalten, wobei die Datenbank (123) von Dateien dazu konfiguriert ist, schädliche Dateien, vertrauenswürdige Dateien und nicht vertrauenswürdige Dateien zu speichern;

mehrere Antivirus-Aufzeichnungen, die unterschiedliche lokalitätssensitive Hashes für jede schädliche Datei enthalten, in der Datenbank (123) von Dateien zu erzeugen, wobei jede der mehreren Antivirus-Aufzeichnungen einen lokalitätssensitiven Hash umfasst, der aus einem unterschiedlichen Satz von Dateiattributen der schädlichen Datei berechnet wurde;

durch Bestimmen, wie viele unterschiedliche schädliche Dateien unter Verwendung jeder Antivirus-Aufzeichnung detektiert wurden, und einer Anzahl von falschen positiven Detektionen durch die Antivirus-Aufzeichnung eine Effektivität jeder Antivirus-Aufzeichnung zu berechnen;

einen Satz von effektivsten Antivirus-Aufzeichnungen zu erzeugen, durch:

Auswählen, für jede bekannte schädliche Datei, der effektivsten Antivirus-Aufzeichnung, die bei einer Detektion der schädlichen Datei verwendet wurde, wobei die effektivste Antivirus-Aufzeichnung als eine Funktion sowohl der Anzahl unterschiedlicher schädlicher Dateien, die durch die Antivirus-Aufzeichnung detektiert wurden, als auch der Anzahl falscher positiver Detektionen durch die Antivirus-Aufzeichnung berechnet wird;

Bestimmen, ob die ausgewählte Antivirus-Aufzeichnung bereits im Satz enthalten ist; und

ansprechend auf ein Bestimmen, dass die ausgewählte Antivirus-Aufzeichnung nicht im Satz enthalten ist, Hinzufügen der Aufzeichnung zu dem Satz; und

den Satz von effektivsten Antivirus-Aufzeichnungen an ein Kundengerät (100) zu übertragen.

9. System nach Anspruch 8, wobei jede Antivirus-Aufzeichnung ferner eine oder mehrere umfasst von: einer Signatur einer schädlichen Datei; einer heuristischen Regel, die zur Detektion einer schädlichen Datei während einer Emulation der schädlichen Datei verwendet wurde; oder einer heuristischen Regel, die zur Detektion einer schädlichen Datei während einer proaktiven Detektion verwendet wurde.

10. System nach Anspruch 8 oder 9, wobei das Berechnen einer Effektivität jeder Antivirus-Aufzeichnung ein Sammeln, durch eine Antivirus-Anwendung (121), die auf dem Server (120) läuft, von Statistiken über eine Anzahl von schädlichen Dateien umfasst, die durch die Antivirus-Anwendung (121) unter Verwendung jeder Antivirus-Aufzeichnung detektiert wurden.

11. System nach Anspruch 8 oder 9, wobei die Effektivität einer Antivirus-Aufzeichnung als eine Funktion einer Anzahl von unterschiedlichen schädlichen Dateien, die durch die Antivirus-Aufzeichnung detektiert wurden, der Anzahl von falschen positiven Detektionen durch die Antivirus-Aufzeichnung und einer Kategorie berechnet wird, zu der jede der detektierten schädlichen Dateien gehört, wobei die Kategorie vertrauenswürdig, nicht vertrauenswürdigen oder schädlich umfasst.

12. System nach Anspruch 11, wobei die Effektivität einer Antivirus-Aufzeichnung ferner als eine Funktion einer Popularität jeder detektierten schädlichen Datei auf Kundengeräten (100) berechnet wird.

13. System nach Anspruch 8 oder 9, wobei der Satz von Dateiattributen der schädlichen Datei, der verwendet wird, um wenigstens einen der lokalitätssensitiven Hashes zu berechnen, umfasst:

a) die Dateigröße, die Dateibildgröße, die Anzahl von Dateisektionen, die zugehörige virtuelle Adresse (*Related Virtual Address;* RVA) der Dateisektionen, die RVA des Eintrittspunkts, den Typ Subsystem, die Dateicharakteristika aus dem Header des allgemeinen Objektdateiformats (*Common-Object-File-Format;* COFF), und den Typ Compiler, der verwendet wurde, um die Datei zu erzeugen;

b) die Dateigröße, die Dateibildgröße, den Typ Subsystem, und die Frequenzcharakteristika der Zeichen in der Datei; oder

c) die Dateigröße, die Dateibildgröße, den Typ Subsystem, die Dateicharakteristika aus dem COFF-Header, den Typ Compiler, der verwendet wurde, um die Datei zu erzeugen, und die Frequenzcharakteristika der Zeichen in der Datei.

14. System nach Anspruch 8 oder 9, wobei jede Antivirus-Aufzeichnung ferner Informationen umfasst, die das Verfahren zum Berechnen des lokalitätssensitiven Hashes identifizieren, der in der Antivirus-Aufzeichnung enthalten ist.

15. Computerprogrammprodukt, das auf einem nichtflüchtigen computerlesbaren Speichermedium gespeichert ist, wobei das Computerprogrammprodukt computerausführbare Instruktionen zum Durchführen der Verfahrensschritte der Ansprüche 1 - 7 umfasst.

## Revendications

1. Un procédé de génération d'un ensemble d'enregistrements d'antivirus, le procédé comprenant :

l'entretien, par un serveur (120), d'une base de données (123) de fichiers, la base de données (123) de fichiers étant configurée de façon à conserver en mémoire des fichiers malveillants, des fichiers fiables et des fichiers non fiables, la génération, par le serveur (120), de plusieurs enregistrements d'antivirus contenant des hachages sensibles à la similarité différents pour chaque fichier malveillant dans la base de données (123) de fichiers, chaque enregistrement des plusieurs enregistrements d'antivirus comprenant un hachage sensible à la similarité calculé à partir d'un ensemble différent d'attributs de fichier du fichier malveillant, le calcul, par le serveur (120), d'une efficacité de chaque enregistrement d'antivirus par la détermination du nombre de fichiers malveillants différents qui ont été détectés au moyen de chaque enregistrement d'antivirus et d'un nombre de détections de faux positifs par ledit enregistrement d'antivirus,

la génération, par le serveur (120), d'un ensemble d'enregistrements d'antivirus les plus efficaces, comprenant :

la sélection, pour chaque fichier malveillant connu, de l'enregistrement d'antivirus le plus efficace utilisé dans la détection dudit fichier malveillant, l'enregistrement d'antivirus le plus efficace étant calculé sous la forme d'une fonction à la fois du nombre de fichiers malveillants différents détectés par l'enregistrement d'antivirus et du nombre de détections de faux positifs par l'enregistrement d'antivirus,

la détermination si l'enregistrement d'antivirus sélectionné est déjà dans l'ensemble, et

en réponse à la détermination que l'enregistrement d'antivirus sélectionné n'est pas dans l'ensemble, l'ajout dudit enregistrement à l'ensemble, et

la transmission, par le serveur (120), de l'ensemble d'enregistrements d'antivirus les plus efficaces à un dispositif client (100).

**2.** Le procédé selon la revendication 1, dans lequel chaque enregistrement d'antivirus comprend en outre un ou plusieurs éléments parmi : une signature d'un fichier malveillant, une règle heuristique utilisée pour la détection d'un fichier malveillant au cours d'une émulation du fichier malveillant ou une règle heuristique utilisée pour la détection d'un fichier malveillant au cours d'une détection proactive.

**3.** Le procédé selon la revendication 1 ou 2, dans lequel le calcul d'une efficacité de chaque enregistrement d'antivirus comprend le recueil, par une application antivirus (121) exécutée sur le serveur (120), de statistiques relatives à un nombre de fichiers malveillants détectés par l'application antivirus (121) au moyen de chaque enregistrement d'antivirus.

**4.** Le procédé selon la revendication 1 ou 2, dans lequel l'efficacité d'un enregistrement d'antivirus est calculée sous la forme d'une fonction d'un nombre de fichiers malveillants différents détectés par ledit enregistrement d'antivirus, du nombre de détections de faux positifs par l'enregistrement d'antivirus et d'une catégorie à laquelle chacun des fichiers malveillants détectés appartient, la catégorie comprenant des fichiers parmi des fichiers fiables, non fiables et malveillants.

**5.** Le procédé selon la revendication 4, dans lequel l'efficacité d'un enregistrement d'antivirus est calculée en outre sous la forme d'une fonction d'une popularité de chaque fichier malveillant détecté sur des dispositifs clients (100).

**6.** Le procédé selon la revendication 1 ou 2, dans lequel l'ensemble d'attributs de fichier du fichier malveillant utilisé de façon à calculer au moins un des hachages sensibles à la similarité comprend :

a) la taille de fichier, la taille d'image de fichier, le nombre de sections de fichier, l'adresse virtuelle associée (RVA) des sections de fichier, la RVA du point d'entrée, le type de sous-système, les caractéristiques de fichier provenant de l'entête de format de fichier objet commun (COFF) et le type de compilateur utilisé pour créer le fichier,

b) la taille de fichier, la taille d'image de fichier, le type de sous-système et les caractéristiques de fréquence des caractères dans le fichier, ou

c) la taille de fichier, la taille d'image de fichier, le type de sous-système, les caractéristiques de fichier provenant de l'entête COFF, le type de compilateur utilisé pour créer le fichier et les caractéristiques de fréquence des caractères dans le fichier.

**7.** Le procédé selon la revendication 1 ou 2, dans lequel chaque enregistrement d'antivirus comprend en outre des informations identifiant le procédé de calcul du hachage sensible à la similarité contenu dans l'enregistrement d'antivirus.

**8.** Un système de génération d'ensembles d'enregistrements d'antivirus, le système comprenant :

un serveur (120) possédant un processeur matériel (21) configuré de façon à :

entretenir une base de données (123) de fichiers, la base de données (123) de fichiers étant configurée de façon à conserver en mémoire des fichiers malveillants, des fichiers fiables et des fichiers non fiables,

générer plusieurs enregistrements d'antivirus contenant des hachages sensibles à la similarité différents pour chaque fichier malveillant dans la base de données (123) de fichiers, chaque enregistrement des plusieurs enregistrements d'antivirus comprenant un hachage sensible à la similarité calculé à partir d'un ensemble différent d'attributs de fichier du fichier malveillant,

calculer une efficacité de chaque enregistrement d'antivirus par la détermination du nombre de fichiers malveillants différents qui ont été détectés au moyen de chaque enregistrement d'antivirus et d'un nombre de détections de faux positifs par ledit enregistrement d'antivirus,

générer un ensemble d'enregistrements d'antivirus les plus efficaces, par :

la sélection, pour chaque fichier malveillant connu, de l'enregistrement d'antivirus le plus efficace utilisé dans la détection dudit fichier malveillant, l'enregistrement d'antivirus le plus efficace étant calculé sous la forme d'une fonction à la fois du nombre de fichiers malveillants différents détectés par ledit enregistrement d'antivirus et du nombre de détections de faux positifs par ledit enregistrement d'antivirus,

la détermination si l'enregistrement d'antivirus sélectionné est déjà dans l'ensemble, et

en réponse à la détermination que l'enregistrement d'antivirus sélectionné n'est pas dans l'ensemble, l'ajout dudit enregistrement à l'ensemble, et

transmettre l'ensemble d'enregistrements d'antivirus les plus efficaces à un dispositif client (100).

9. Le système selon la revendication 8, dans lequel chaque enregistrement d'antivirus comprend en outre un ou plusieurs éléments parmi : une signature d'un fichier malveillant, une règle heuristique utilisée pour la détection d'un fichier malveillant au cours d'une émulation du fichier malveillant ou une règle heuristique utilisée pour la détection d'un fichier malveillant au cours d'une détection proactive.

10. Le système selon la revendication 8 ou 9, dans lequel le calcul d'une efficacité de chaque enregistrement d'antivirus comprend le recueil, par une application antivirus exécutée sur le serveur (120), de statistiques relatives à un nombre de fichiers malveillants détectés par l'application antivirus au moyen de chaque enregistrement d'antivirus.

11. Le système selon la revendication 8 ou 9, dans lequel l'efficacité d'un enregistrement d'antivirus est calculée sous la forme d'une fonction d'un nombre de fichiers malveillants différents détectés par ledit enregistrement d'antivirus, du nombre de détections de faux positifs par l'enregistrement d'antivirus et d'une catégorie à laquelle chacun des fichiers malveillants détectés appartient, la catégorie comprenant des fichiers parmi des fichiers fiables, non fiables et malveillants.

12. Le système selon la revendication 11, dans lequel l'efficacité d'un enregistrement d'antivirus est calculée en outre sous la forme d'une fonction d'une popularité de chaque fichier malveillant détecté sur des dispositifs clients (100).

13. Le système selon la revendication 8 ou 9, dans lequel l'ensemble d'attributs de fichier du fichier malveillant utilisé de façon à calculer au moins un des hachages sensibles à la similarité comprend :

a) la taille de fichier, la taille d'image de fichier, le nombre de sections de fichier, l'adresse virtuelle associée (RVA) des sections de fichier, la RVA du point d'entrée, le type de sous-système, les caractéristiques de fichier provenant de l'entête de format de fichier objet commun (COFF) et le type de compilateur utilisé pour créer le fichier,

b) la taille de fichier, la taille d'image de fichier, le type de sous-système et les caractéristiques de fréquence des caractères dans le fichier, ou

c) la taille de fichier, la taille d'image de fichier, le type de sous-système, les caractéristiques de fichier provenant de l'entête COFF, le type de compilateur utilisé pour créer le fichier et les caractéristiques de fréquence des caractères dans le fichier.

14. Le système selon la revendication 8 ou 9, dans lequel chaque enregistrement d'antivirus comprend en outre des informations identifiant le procédé de calcul du hachage sensible à la similarité contenu dans l'enregistrement d'antivirus.

15. Un produit de programme informatique conservé en mémoire sur un support à mémoire lisible par ordinateur non transitoire, le produit de programme informatique comprenant des instructions exécutables par ordinateur destinées à l'exécution des étapes de procédé des revendications 1 à 7.

**Fig. 1**

Create antivirus records for
detecting of malicious files ⟍201

↓

Collect statistics on the
use of antivirus records ⟍202

↓

Calculate effectiveness
of each antivirus record ⟍203

↓

Generate a set of antivirus records ⟍204

↓

Send the generated set of antivirus
records to the user's computer for use
by the antivirus application ⟍205

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2854065 A1
- WO 2015084313 A1
- US 9147073 B
- US 8566943 B
- US 8955120 B